Europäisches Patentamt

European Patent Office

Office européen des brevets

(11) Publication number: **0 141 586**
**B1**

(12) **EUROPEAN PATENT SPECIFICATION**

(45) Date of publication of patent specification: **12.09.90**

(51) Int. Cl.⁵: **H 04 N 5/93, H 04 N 5/94**

(21) Application number: **84307162.2**

(22) Date of filing: **18.10.84**

(54) Video signal processing apparatus.

(30) Priority: **18.10.83 JP 194559/83**
**16.12.83 JP 238138/83**

(43) Date of publication of application:
**15.05.85 Bulletin 85/20**

(45) Publication of the grant of the patent:
**12.09.90 Bulletin 90/37**

(84) Designated Contracting States:
**DE FR GB**

(56) References cited:
**DE-A-2 751 022**
**DE-A-2 846 939**
**GB-A-2 087 195**
**US-A-4 251 831**

(73) Proprietor: **Matsushita Electric Industrial Co.,
Ltd.
1006, Oaza Kadoma
Kadoma-shi Osaka-fu, 571 (JP)**

(72) Inventor: **Tomita, Masao
Higashi 2-102 go 271-2, Oaza Uchiage
Neyagawa-shi Osaka-fu, 572 (JP)**
Inventor: **Hasima, Akio
35-6, Koaza Mitzutori Oaza Maki Tanabe-cho
Tsuzuki-gun Kyoto-fu, 610-03 (JP)**
Inventor: **Ohta, Haruo
Shoei ryo, 30-23, Miyukihigashimachi
Neyagawa-shi Osaka-fu, 572 (JP)**
Inventor: **Matsuo, Tadaaki
Shoto ryo, 5-103, Touda-cho
Moriguchi-shi Osaka-fu, 570 (JP)**

(74) Representative: **Crawford, Andrew Birkby et al
A.A. THORNTON & CO. Northumberland House
303-306 High Holborn
London WC2A 1AY (GB)**

## Description

This invention relates to a video signal processing apparatus used for a video signal recording/reproducing apparatus such as a video tape recorder or a video disc player and performing dropout compensation and/or line noise cancellation of video signals.

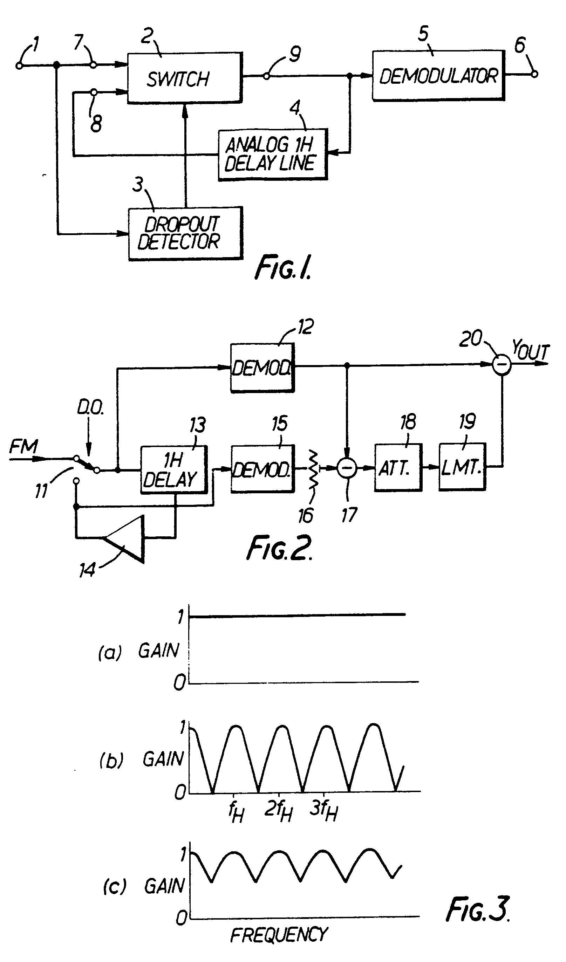

Recently, video signal recording/reproducing apparatus such as video tape recorders (VTR) and video disc players have been proposed with a dropout compensating unit which replaces a reproduced video signal containing a dropout by a signal produced from one horizontal (1 H) scanning period before on the basis of the line correlation of a television (TV) picture. Fig. 1 shows a block diagram of a dropout compensating unit which has been previously proposed. A frequency modulated (FM) video signal reproduced from a reproducing head is fed to an input terminal 1. When the reproduced signal contains no dropout, the signal is passed through an input terminal 7 of an electronic switch 2, and from an output terminal 9 of the electronic switch 2 to a demodulator 5. When the reproduced FM video signal contains a dropout, a dropout detector 3 detects the dropout and controls the switch 2 to connect another input terminal 8 of the switch 2 to the output terminal 9 via a delay line 4. The delay line 4 supplies an output signal to the terminal 8 which is delayed by one horizontal period (1 H) so that the input to terminal 8 is the immediately preceding line signal. Thus the reproduced FM video signal containing a dropout is not applied to the demodulator 5, but instead, the reproduced FM video signal from one line previously is applied to the demodulator 5. Accordingly, the demodulator 5 is always applied with FM video signals containing no dropouts and demodulates and outputs the same at an output terminal 6. Examples of such dropout compensators are disclosed in GB—A—2087195.

However, the 1 H delay line is an analog delay line usually composed of a glass delay line, which is difficult to produce if small in size. Further, when the dropout occupies a period longer than 1 H, the same video signal must be repeatedly circulated around the loop composed of the switch 2 and the 1 H delay line 4 so that it becomes degraded (reduced in amplitude and bandwidth) due to the non-linearity and insertion loss of the 1 H delay line 4.

DE—A—2846939 discloses a dropout compensation of the above type utilizing a digital delay.

On the other hand, in VTRs, the luminance signal is recorded on a magnetic tape with its frequency modulated. Since the S/N ratio of the tape-head system is not always sufficient, the S/N ratio of the reproduced luminance signal is also often insufficient, and as a result, noise is perceived on the reproduced picture. For improving the S/N ratio of the luminance signal, a so-called line noise cancelling circuit as shown in Figure 2 has been proposed. Basically, it eliminates unnecessary spectrum by means of a Y-type comb filter to improve the S/N ratio, making use of the line correlation of the luminance signal. When this is done, a proper measure is provided for preventing deterioration in the vertical resolution of the picture. The frequency-modulated luminance signal (FM$_Y$) is fed to one input terminal of a switch 11. The common terminal of the switch 11 is connected to a demodulator 12 and to a 1 H delay line 13. The output of the 1 H delay line 13 is connected to the other input terminal of the switch 11 and to a demodulator 15 through an amplifier 14. The output of the demodulator 15 is applied to a subtraction circuit 17 through an amplitude regulator 16. The output of the demodulator 12 is also applied to the subtraction circuit 17. The output signal of the subtraction circuit 17 is applied to a further subtraction circuit 20 through an attenuator 18 and a limiter 19. The output of the demodulator 12 is also applied to the further subtraction circuit 20. At the output of the subtraction circuit 20 a luminance signal (Y$_{out}$) having an improved S/N ratio is obatained.

In Figure 2, the switch 11, 1 H delay line 13 and amplifier 14 compose a dropout compensator as described above. In a normal state with no dropouts, the switch 11 is positioned as shown in Figure 2, and the input FM$_Y$ signal is connected to the next stage as it is. If a dropout occurs, the switch 11 is shifted to its other position by a signal indicated by the letters D.O., and the FM$_Y$ signal is replaced by a signal inputted 1 H before and having no dropout. The insertion loss by the 1 H delay line is compensated by the amplifier 14.

The droplet-compensated FM$_Y$ signal is demodulated by the demodulator 12 and applied to the subtraction circuit 17 as the luminance signal of base band. Whereas the FM$_Y$ signal, which has passed through the 1 H delay line 13 and amplifier 14, is demodulated by the demodulator 15 and turned into the luminance signal of the base band which is delayed by 1 H, and then applied to the subtraction circuit 17 through the amplitude regulator 16. The subtraction circuit 17 forms a C-type comb filter against the demodulated luminance signal. When the output of the subtraction circuit 17 is low (i.e. correlation of the luminance signal is high), it is within the limited level of the limiter 19 and is applied to the further subtractions circuit 20 as it is. When the output of the subtraction circuit 17 is high (i.e. correlation of the luminance signal is low), its amplitude is clipped within a fixed amplitude by the limiter 19 and applied to the subtraction circuit 20. Therefore, the output of the subtraction circuit 20 becomes a signal passed through a Y-type comb filter in an area where correlation of the luminance signal is high, so that the S/N ratio is improved with noise components reduced. An example of such a line noise canceller is disclosed in GB—A—2 087 195.

The Y-type comb filter is not formed in an area where correlation of the luminance signal is low, because the amplitude is limited by the limiter 19 and the input signal is output as it is. Consequently, vertical resolution is not deteriorated. The attenuator 18 is for adjusting the input level of the subtraction circuit 20 closer to the output level of the demodulator 12, because the amplitude of the C-type comb filter (which is the output of the subtraction circuit 17) is double the input level.

Figure 3 is provided for explaining the operation of the construction of Figure 2 in terms of frequency characteristic. Figure 3(a) shows the frequency characteristic when correlation of the input luminance signal is low. It shows that the input luminance signal is outputted as it is. Although the S/N ratio is not improved, the vertical resolution of the reproduced picture is not deteriorated. Figure 3(b) shows the frequency characteristic when correlation of the input luminance signal is high. This is what is called the characteristic of the Y-type comb filter which provides gain 1 with respect to the frequency integer times higher than the horizontal scanning frequency $(f_H)$ and gain 0 with respect to the frequency (1/2 line offset) odd number times higher than 1/2 $f_H$. In this case, noise occurring around the 1/2 line offset frequency points is eliminated, so that the S/N ratio is improved. When there is no correlation in the vertical direction of the picture like this, the S/N ratio can be improved without deteriorating the vertical resolution, because the comb filter is formed only in an area where correlation appears.

The above described line noise canceller has some defects. First, since the pass band is not of the base band starting from 0 Hz and allows only an RF signal to pass because the 1 H delay line is a glass delay line, it makes a frequency-modulated luminance signal pass. Thus, two or more frequency demodulators are required because the output signal of the delay line and the input signal must be demodulated respectively. Second, since the glass delay line has an insertion loss, an amplifier 14 is required to adjust a level up to the input signal level. Third, since the insertion loss of the glass delay line tends to vary widely, an amplitude regulator 16 is required to form the comb filter. Fourth, the frequency characteristic of the pass band of the glass delay line fluctuates greatly, and the fluctuation deteriorates the frequency characteristic of the final luminance signal. Due to this reason, the attenutation rate of the attenutator 18 is normally set low so that the frequency characteristic of the glass delay line will not seriously affect the output. Theoretically, if the attenuation rate is halved, the complete characteristic of the comb filter shown in Figure 3(b) can be obtained. Actually, however, since the attenuation rate is quartered so that the output will not be affected by the fluctuation of the frequency characteristic of the 1 H delay line 13, the comb filter characteristic becomes as shown in Figure 3 (c), preventing the complete comb filter characteristic from being obtained. This not only reduces the improvement of the S/N ratio, but also cannot sufficiently eliminate cross modulation components of a chroma signal whose spectrum exists at the position of 1/2 $f_H$ line offset.

Furthermore, although not shown in the Figure, since the delay time of the glass delay line also varies widely, the delay time of each delay line needs to be adjusted.

As described above, since the conventional line noise canceller uses a glass delay line, various measures are required to compensate for its configuration.

Further, since the dropout compensator and the line noise canceller are provided independently of each other in the conventional video signal processing apparatus, two line memories must be used, resulting in a high cost.

The present invention provides a video signal processing apparatus comprising:

a dropout compensator comprising digital delaying means for delaying an input video signal $FM_Y$ by a predetermined period, the input of said delaying means being connected to the common terminal of switching means, said switching means selecting the input video signal $FM_Y$, when it contains no dropout and being responsive to a dropout detection signal for selecting the delayed video signal thereby to compensate a dropout; and

a line noise canceller comprising said digital delaying means, first calculating means for subjecting the input signal of the digital delaying means and the delayed output signal of the digital delaying means to a first calculation, limiting means for limiting an output signal of the first calculating means, and second calculating means for subjecting the input signal of the digital delaying means and an output signal of the limiting means to a second calculation thereby to cancel a line noise.

Preferably, the digital delaying means may comprise a digital memory with an analog to digital converter and a digital to analog converter being respectively provided before and after the digital memory to allow more compact circuit construction and prevention of signal deterioration even when a long-lasting dropout occurs because the digital memory causes no insertion loss and no bandwidth reduction. More preferably, the analog to digital converter may be provided before the dropout compensator, and the digital to analog converter may be provided after the line noise canceller. In this case, the dropout compensator and the line noise canceller can be constructed by digital circuits, which further facilitates the semiconductor production and improves the reliability of the apparatus.

In order that the present invention be more readily understood, embodiments thereof will now be described by way of example with reference to the accompanying drawings, in which:—

Figure 1 is a block diagram of a previously proposed dropout compensating apparatus;

Figure 2 is a block diagram of a circuit of a previously proposed line noise canceller;

Figure 3 is a frequency characteristic to explain the operation of the circuit shown in Figure 2;

Figure 4 is a schematic block diagram of a part of a dropout compensator;

Figure 5 is a schematic block diagram of a part of a line noise canceller; and

Figure 6 is a schematic block diagram of a main part of one embodiment of a dropout compensation and line noise cancellation apparatus according to this invention.

Before describing the present invention, it is considered helpful to describe the basic form of parts thereof.

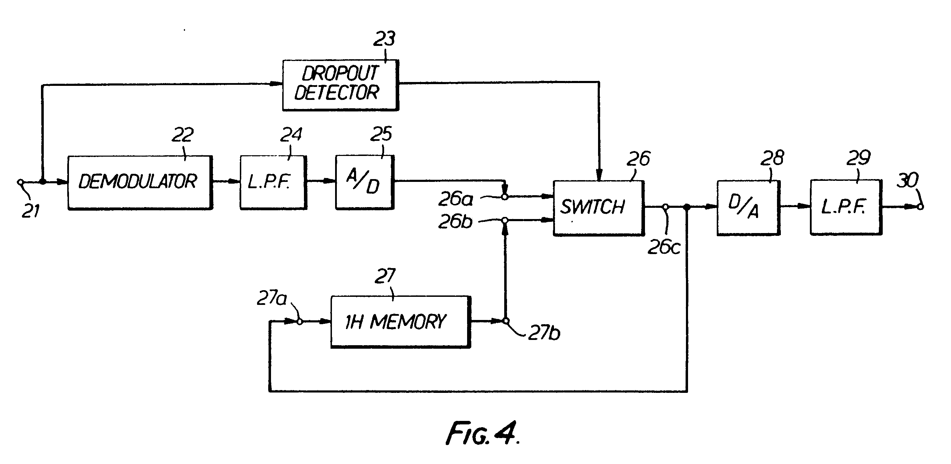

Referring now to Figure 4, this shows a main part of a dropout compensation in which a reproduced FM video signal 21 is fed as an input to a demodulator 22 which demodulates the video signal and feeds the demodulated signal to a low-pass filter 24 which eliminates high-pass components which are unnecessary for digitising signals. The output of the filter 24 is connected to an A/D converter 25 whose output is connected to one input 26a of an electronic switch 26 which is controlled by an output from a dropout detector 23. An output terminal 26c of the switch 26 is connected to a memory 27 which outputs a digital signal delayed by 1 H, to another input terminal 26b of the switch 26. The output terminal 26c is also connected by a D/A converter 28 and a low-pass filter 29 which eliminates unnecessary high-pass components of an analog signal converted by the D/A converter 28, to an output terminal 30. The output from 30 is a dropout-compensated signal.

When the reproduced video signal input to the input terminal 21 does not contain a dropout, the switch 26 connects the output terminal 26c with the input terminal 26a. After having been demodulated by the demodulator 22, the reproduced video signal has unnecessary high frequency components removed by the low-pass filter 24, and the filtered signal is converted to a digital demodulated signal by the A/D converter 25, and fed to the output terminal 26c from the input terminal 26a through the switch 26. The digital signal is reconverted to an analog reproduced video signal by the D/A converter 28, filtered of unnecessary high frequency components by the low-pass filter 29 and output from the output terminal 30. In this process, the digital signal at the output terminal 26c is also stored into the memory 27, and after being delayed by a period of 1 H, appears at the output terminal 27b of the memory 27.

On the other hand, when the reproduced video signal at the input terminal 21 contains a dropout, the dropout detector 23 detects the dropout and controls the switch 26 to connect the output terminal 26c with the input terminal 26b. As a result, the signal contained in the memory 27 is applied to the D/A converter 28 in place of the video signal input at the time. Even when a dropout exceeding 1 H exists, the reproduced signal is delayed by n. H (n denoting an integer) in digital form without being deteriorated.

In Figure 4, the demodulator 22 may be placed between the low-pass filter 29 and the output terminal 30 with the effects of the circuit unchanged.

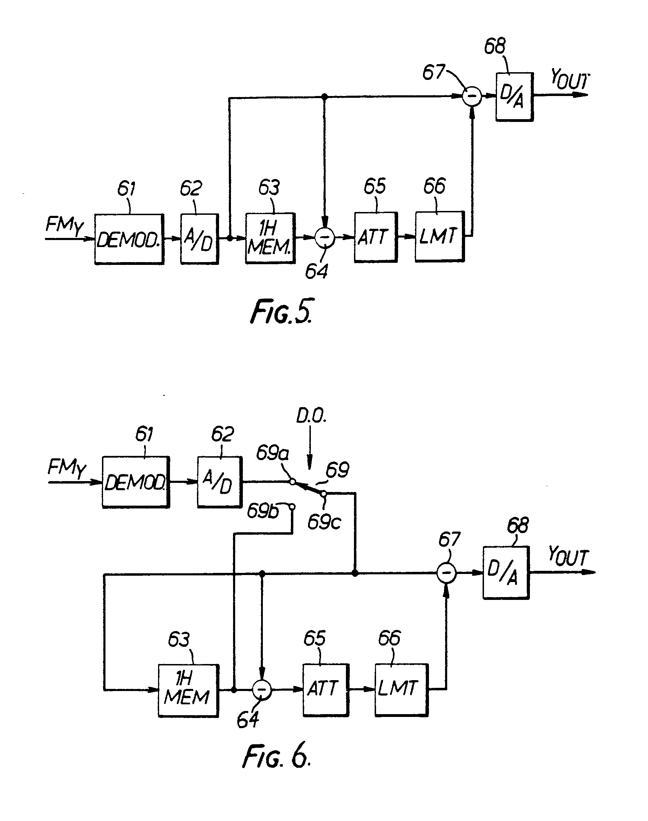

Figure 5 shows a schematic block diagram of a line noise canceller for the luminance signal. A frequency-modulated luminance signal ($FM_Y$) reproduced from a recording medium passes through a demodulator 61 and is converted to a digital signal by an A/D converter 62. The digital signal is applied to subtraction circuits (difference calculation circuits) 64 and 67, and a 1 H memory 63. The output of the 1 H memory 63 is fed to the subtraction circuit 64. The output of the subtraction circuit 64 is applied to the subtraction circuit 67 through an attenuator 65 and a limiter 66. The output of the subtraction circuit 67 is applied to a D/A converter 68, from which the processed luminance signal ($Y_{OUT}$) is output.

The base band luminance signal is demodulated by the demodulator 61, and converted to a digital signal by the A/D converter 62. The digitalised luminance signal is delayed by 1 H in the 1 H memory 63. Since the 1 H memory 63 is a digital memory such as a shift register or a random access memory (RAM) or a combination of the two, it can be an ideal delay element which is not theoretically accompanied by attenuation of the amplitude, fluctuations of the frequency characteristic or time error, and has no irregularity. The 1 H memory 63 and the subtraction circuit 64 form a C-type comb filter. The output of the C-type comb filter is reduced in level by the attenuator 65 so that the amplitude is halved. This can be easily achieved by shifting the digital signal by 1 bit lower. Since the 1 H memory 63 is not accompanied by the fluctuation of the frequency characteristic, the attenuation rate of the attenuator 65 can be set at exactly 1/2. The output of the attenuator 65 is limited in amplitude by the limiter 66 in such a way that only the lower bits of the digital signal are passed to the next stage. The output of the limiter 66 is applied to the subtraction circuit 67.

The output signal of the subtraction circuit 67 shows a characteristic as if having passed through a Y-type comb filter when the output signal level of the subtraction circuit 64 is small. On the other hand, when the output signal level of the subtraction circuit 64 is large, the output signal of the A/D converter 62 appears as it is at the output of the subtraction circuit 67. Therefore, the reconverted analog signal at the output of the D/A converter 68 becomes as shown in Figure 3(a) or (b). Therefore, the S/N ratio is improved by the Y-type comb filter in an area where the correlation of the input luminance signal is high, whereas the input luminance signal is output as it is in an area where the correlation of the input luminance signal is low, thus satisfying the function as a line noise canceller that the picture is not deteriorated in the vertical direction.

Some features of the embodiment of Figure 5 will be described below compared with the conventional example in Figure 2. First, since the digitised base-band luminance signal can be delayed by 1 H only one demodulator 61 may be provided for demodulating the frequency-modulated luminance signal. Second, the amplitude compensating amplifier is not required because the 1 H memory 63 does not cause an insertion loss. In addition, since the amplitude does not vary at all, the level controller is not required before the subtraction circuit 64. Third, since the frequency characteristic of the 1 H memory 63 does not fluctuate, the attenuation rate of the attenuator 65 can be set at 1/2 to meet the theory. Accordingly, it is possible to adjust the characteristic of the comb filter so that the minimum gain may become 0 as shown in Figure 3(b). Putting together the first and second features and the fact that processing is all done digitally, it is possible to make the apparatus compact and decrease the cost due to simplification and semiconductorisation of the circuit.

The third feature is related to performance. Considering that the S/N ratio can be improved more than the conventional analog type and that especially the cross modulation component of the chroma signal is of 1/2 line offset and exist at the valley of the Y-type comb filter characteristic, there is a considerable difference in the effects of reduction of the cross modulation components.

Figure 6 shows a block diagram of an embodiment of the invention in which like reference numerals identify like parts in Figures 5 and 6. The embodiment has a dropout compensating function in addition to the line noise cancelling function in Figure 5. The 1 H memory 63 is commonly used for both functions. The digital luminance signal outputted from the A/D converter 62 is applied to an input terminal 69a of a switch 69. The other input terminal 69b of the switch 69 is connected with the output terminal of the 1 H memory 63 which delays the signal at a common terminal 69c of the switch 69 by 1 H. When no dropout occurs, the digital luminance signal from the A/D converter 62 appears at the common terminal 69c of the switch 69 as it is, and it is applied to the line noise canceller. When a dropout occurs, the switch 69 is changed over by a D.O signal produced by a dropout detector (not shown in the figure), so that the 1 H delayed signal from the 1 H memory is applied to the line noise canceller.

In this case, the dropout compensated signal is the digitised luminance signal of the base band. What are superior to the conventional example shown in Figure 2 are that level adjustment and time adjustment are not required, and that phase noises are not caused when changing over the switch 69.

As is clear from the above description, this invention not only eliminates the defects of the conventionally used glass delay line by making a 1 H memory cause a delay of one horizontal scanning period after converting the luminance signal into a digital signal, but also carries out the functioning of the line noise cancellation and dropout compensation without fine adjustment with a simple construction. Especially, combined with the points that only one demodulator is necessary, that an insertion loss compensating amplifier is not necessary, that level adjustment and time adjustment of the comb filter are not necessary, and that semiconductorisation is easy because all signals are processed digitally, this invention is very effective in realisation of a compact and low cost signal processing apparatus for video signal recording/reproducing apparatus. Furthermore, since this invention enables ideal comb filter characteristics which could not be realised by the conventional line noise canceller, it contributes to a large improvement in the S/N ratio and elimination of cross modulation components of the chroma signal.

## Claims

1. A video signal processing apparatus comprising:
a dropout compensator (63, 69) comprising digital delaying means (63) for delaying an input video signal $FM_Y$ by a predetermined period, the input of said delaying means (63) being connected to the common terminal (69c) of switching means (69), said switching means (69) selecting the input video signal $FM_Y$, when it contains no dropout and being responsive to a dropout detection signal for selecting the delayed video signal thereby to compensate a dropout; and
a line noise canceller (63—67) comprising said digital delaying means (63), first calculating means (64) for subjecting the input signal of the digital delaying means (63) and the delayed output signal of the digital delaying means (63) to a first calculation, limiting means (65, 66) for limiting an output signal of the first calculating means (64), and second calculating means (67) for subjecting the input signal of the digital delaying means (63) and an output signal of the limiting means (65, 66) to a second calculation thereby to cancel a line noise.

2. An apparatus according to claim 1, wherein said digital delaying means (63) comprises a digital memory with an analog to digital converter (62) and a digital to analog converter (68) being respectively provided before and after the digital memory.

3. An apparatus according to claim 2, wherein said analog to digital converter (62) is provided before said dropout compensator (63, 69) and said digital to analog converter (68) is provided after said line noise canceller (63—67) with the dropout compensator (63, 69) and line noise canceller (63, 67) being constructed by digital circits.

## Patentansprüche

1. Videosignalverarbeitungsvorrichtung, enthaltend:
einen Ausfallkompensator (63, 69), enthaltend eine digitale Verzögerungseinrichtung (63) zum Verzögern eines Videoeingangssignals $FM_Y$ um eine vorbestimmte Zeitdauer, wobei der Eingang der Verzögerungseinrichtung (63) mit dem gemeinsamen Anschluß (69c) einer Schalteinrichtung (69) verbunden ist, die das Videoeingangssi-

gnal FM$_Y$ wählt, wenn es keinen Ausfall aufweist und auf ein Ausfalldetektorsignal anspricht, um zur Kompensation eines Ausfalls das verzögerte Videosignal zu wählen; und

einen Leitungsgeräushchunterdrücker (63—67), enthaltend die digitale Verzögerungseinrichtung (63), eine erste Berechnungseinrichtung (64), die das Eingangssignal der digitalen Verzögerungseinrichtung (63) und das verzögerte Ausgangssignal der digitalen Verzögerungseinrichtung (63) einer ersten Berechnung unterwirft, eine Begrenzungseinrichtung (65, 66) zum Begrenzen des Ausgangssignals der ersten Berechnungseinrichtung (64) und eine zweite Berechnungseinrichtung (67), die das Eingangssignal der digitalen Verzögerungseinrichtung (63) und das Ausgangssignal der Begrenzungseinrichtung (65, 66) einer zweiten Berechnung unterwirft, um dadurch ein Leitungsgeräusch zu unterdrücken.

2. Vorrichtung nach Anspruch 1, bei der die digitale Verzögerungseinrichtung (63) einen Digitalspeicher mit einem Analog/Digital-Wandler (62) und einem Digital/Analog-Wandler (68) enthält, die vor bzw. hinter dem Digitalspeicher angeordnet sind.

3. Vorrichtung nach Anspruch 2, bei der der Analog/Digital-Wandler (62) vor dem Ausfallkompensator (63, 69) und der Digital/Analog-Wandler (68) hinter dem Leitungsgeräuschunterdrücker (63—67) angeordnet sind, wobei der Ausfallkompensator (63, 69) und der Leitungsgeräuschunterdrücker (63, 67) aus digitalen Schaltkreisen aufgebaut sind.

## Revendications

1. Appareil de traitement de signaux vidéo comportant:

un compensateur d'évanouissement (63, 69) comprenant un dispositif de retard numérique (63) destiné à retarder un signal vidéo d'entrée FM$_Y$ d'une période prédéterminée, l'entrée dudit dispositif de retard (63) étant connectée à la borne commune (69c) d'un dispositif de commutation (69), ledit dispositif de commutation (69) sélectionnant le signal vidéo d'entrée FM$_Y$ lorsqu'il ne contient aucun évanouissement et réagissant à un signal de détection d'évanouissement en sélectionnant le signal vidéo retardé de manière à compenser un évanouissement et

un dispositif d'annulation de bruit de ligne (63—67) comportant ledit dispositif de retard numérique (63), un premier dispositif de calcul (64) destiné à soumettre le signal d'entrée du dispositif de retard numérique (63) et le signal de sortie retardé du dispositif de retard numérique (63) à un premier calcul, un dispositif de limitation (65, 66) destiné à limiter le signal de sortie du premier dispositif de calcul (64) et un second dispositif de calcul (67) destiné à soumettre le signal d'entrée du dispositif de retard numérique (63) et le signal de sortie du dispositif de limitation (65, 66) à un second calcul de manière à annuler un bruit de ligne.

2. Appareil selon la revendication 1, dans lequel ledit dispositif de retard numérique (63) comporte une mémoire numérique avec un convertisseur analogique-numérique (62) et un convertisseur numérique-analogique (68) prévus respectivement avant et après la mémoire numérique.

3. Appareil selon la revendication 2, dans lequel ledit convertisseur analogique-numérique (62) est prévu avant ledit compensateur d'évanouissement (63, 69) et ledit convertisseur numérique-analogique (68) est prévu après ledit dispositif d'annulation de bruit de ligne (63—67), avec le compensateur d'évanouissement (63, 69) et le dispositif d'annulation de bruit de ligne (63, 67) étant réalisés par des circuits numériques.

FIG. 1.

FIG. 2.

FIG. 3.

1

FIG. 4.

EP 0 141 586 B1

FIG.5.

FIG. 6.

3